# EUROPEAN PATENT APPLICATION

(11) **EP 1 609 672 A1**
(43) Date of publication of application: **28.12.2005**
(21) Application number: 04102876.2
(22) Date of filing: 22.06.2004
(51) Int. Cl.: B60P 3/36, B60P 3/38

(54) **Recreational vehicle comprising a bedroom with a toilet unit**

(71) Applicant: Chateau Caravans N.V., 3930 Hamont-Achel (BE)
(72) Inventor: van der Sanden, Geert-Jan, 3930, Hamont-Achel (BE); Broers, Jacob, 3930, Hamont-Achel (BE)
(74) Representative: Van Reet, Joseph

(57) **Abstract**

A recreational vehicle having an interior with at least a living room, a kitchen unit, a bedroom (13) and a toilet unit (15) in said bedroom (13) comprising a toilet (21) with a downwardly directed outlet opening and a storage compartment (22) defined and located below said outlet opening with a waste holding tank (23) being removably disposed within said storage compartment (22). One of said side walls (5) has an access opening (34) for removing said tank (23) horizontally out of said storage compartment (22). For enabling two single beds in the bedroom (13) without having to increase the length of the vehicle, the beds (14) are each arranged in the longitudinal direction of the recreational vehicle against an opposite side wall (5) thereof so that a passageway (17) remains between both beds (14). The toilet unit (15) is then arranged between both beds (14) and, in order to enable to remove the tank (23), a tunnel (35) is provided underneath one of said beds (14) connecting the access opening (34) with the storage compartment (22) of the toilet (21).

## Description

The present invention relates to a recreational vehicle, such as a caravan (travel trailer) or a mobile home (motor caravan), having a horizontal floor, a front, a back, a roof and two side walls and comprising an interior with at least a living room, a kitchen unit, a bedroom for at least two persons and a toilet unit in said bedroom, the toilet unit comprising a toilet with a downwardly directed outlet opening and a storage compartment defined and located below said outlet opening with a waste holding tank being removably disposed within said storage compartment, one of said side walls having an access opening for removing said tank horizontally out of said storage compartment and inserting it back therein, said tank having a fill opening positioned in registry with said outlet opening when the tank is inserted horizontally into said storage compartment.

Due to the presence of a bumper on the back of a recreational vehicle, the access opening for inserting or removing the waste holding tank cannot be provided on the back of the vehicle. The access opening can also not be provided on the front of a recreational vehicle. The front of a mobile home is indeed formed by the driver's compartment whilst the front of a caravan is formed by a box for a gas bottle of for other equipment. Consequently, in recreational vehicles which comprise a self-contained toilet unit with an outside access opening, the toilet unit has always been arranged against a side wall of the vehicle. In this way, the waste holding tank of the toilet unit can easily be removed by hand through the access opening in the side wall of the vehicle.

When the toilet unit is arranged in the bedroom, the presence of the toilet unit against the side wall implies that a double bed has to be provided in the bedroom in order to offer sleeping accommodation for two persons. A drawback of a double bed is that it is not appropriate for providing a bunk bed to provide sleeping accommodation for one or two extra persons within the same bedroom, i.e. without having to enlarge the recreational vehicle. Moreover, in the market of recreational vehicles there is an important demand for recreational vehicles having single beds in the sleeping compartment. Single beds are indeed often preferred by older people and are also more appropriate for children. When the bedroom contains two single beds, these beds are arranged in the prior art recreational vehicles against the two opposite side walls of the vehicle and a night table is provided between both beds. If a toilet unit is desired, and if the living room area should not be reduced by the presence of a toilet in the living room, the toilet unit is arranged between the bedroom and the living room. In this way the total length of the recreational vehicle, and thus also the weight thereof, is increased. For caravans, the length and the weight are not only important in view of the costs of the caravan, but depending of the car of the potential customer, the weight of the caravan is an important factor limiting the choice of the customer, in particular when the caravan has to comprise a bedroom with two single beds, a living room, a kitchen unit and additionally a toilet unit.

An object of the present invention is therefore to provide a new recreational vehicle which comprises a living room, a kitchen unit, a toilet unit and a bedroom for at least two persons, and which enables to replace the double bed in the bedroom by at least two single beds without having to increase the total length of the vehicle and without having to reduce the available living space in the living room.

To this end, the recreational vehicle according to the invention is characterised in that the bedroom compartment contains at least two beds, which are each arranged in the longitudinal direction of the recreational vehicle against an opposite side wall thereof so that a passageway remains between both beds, the toilet unit being arranged between both beds and a tunnel being provided underneath at least one of said beds connecting said access opening with the storage compartment of the toilet to enable to remove the waste holding tank through the access opening and the tunnel out of said storage compartment and to insert it back therein.

The present inventor has found that, notwithstanding the fact that for hygienic or other reasons the waste holding tank should be removable through an access opening from the outside to the vehicle, the toilet unit can be placed between two single beds in the sleeping compartment so that the double bed in the prior art recreational vehicles can be replaced by two single beds without having to arrange the toilet unit outside the sleeping compartment. He more particularly has found that the waste holding tank can be removed from and inserted back into the storage compartment of the toilet through a tunnel connecting underneath one of the single beds the outside access opening with the storage compartment. Since the toilet unit can remain next to the beds in the sleeping compartment, the length of the recreational vehicle has no longer to be increased, or the living area in the living room has no longer to be reduced, when replacing the double bed in the sleeping compartment by two single beds.

In an advantageous embodiment of the recreational vehicle according to the present invention, the vehicle contains a bar arranged to be used as a tool for removing the waste holding tank out of the storage compartment and for inserting it back therein. The bar has preferably one hook-shaped end arranged to be hooked behind an element on the waste holding tank to enable to pull the waste holding tank through the tunnel out of the storage compartment. In this embodiment, the size of the tunnel may be adjusted to the size of the waste holding tank since the tunnel does not have to enable the user to take the waste holding tank through the tunnel.

Other particularities and advantages of the invention will become apparent from the following description of some particular embodiments of the recreational vehicle according to the present invention. The reference numerals used in this description relate to the annexed drawings wherein:
Figure 1 is a schematic perspective view on a caravan;
Figure 2 is a technical plan of a particular embodiment of a caravan according to the invention;
Figures 3 and 4 are technical plans of prior art caravans;
Figure 5 is a cross-sectional perspective view on the bedroom of the caravan illustrated in Figure 2;
Figures 6 is a perspective view on a portion of the waste holding tank locked in the storage compartment of the toilet;
Figure 7 is a view similar to Figure 6 but illustrating the waste holding tank in its position wherein it is unlocked by means of the hook-shaped bar so that it can be withdrawn by means of this bar out of the storage compartment of the toilet; and
Figure 8 shows a perspective view of the waste holding tank removed from the storage compartment.

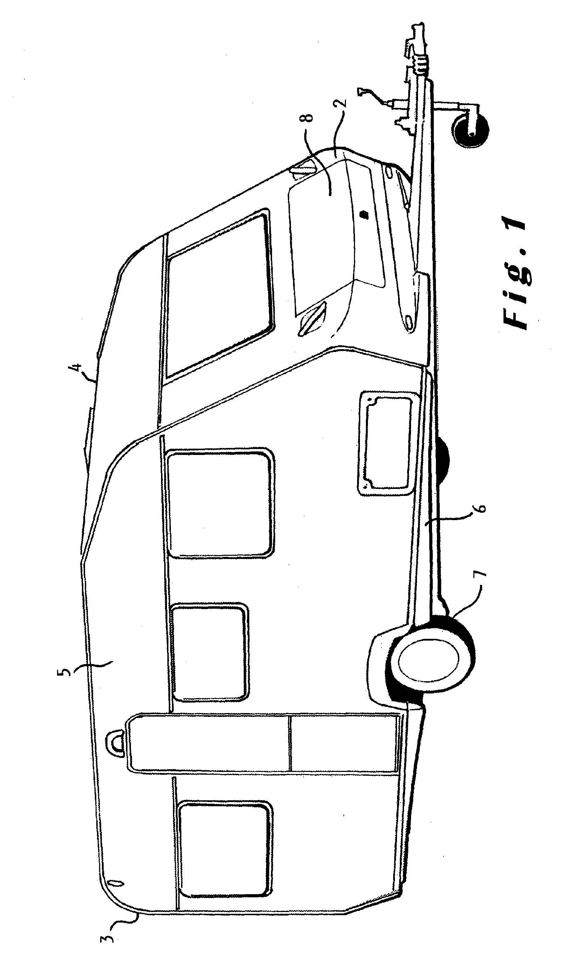

The present invention relates to a new recreational vehicle, in particular to a new concept of such a vehicle. The vehicle can be a mobile home, a caravan, etc. Figure 1 illustrates schematically a caravan. In the further description, reference will be made to a caravan but it will be clear that the described features are equally well applicable to other recreational vehicles.

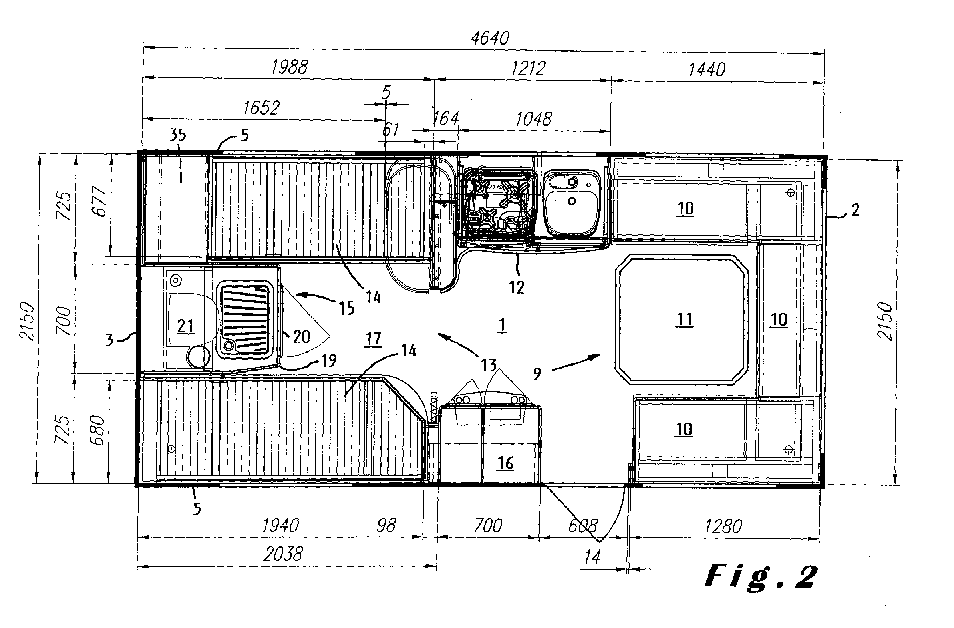

The caravan illustrated in Figure 1 has a horizontal floor 1, a front 2, a back 3, a roof 4 and two side walls 5 mounted on a chassis 6 with two or more wheels 7. The back 3 of the caravan is provided with a bumper (not illustrated) whilst the front 2 of the caravan comprises an outside box 8 for a gas bottle and/or for other equipment or tools. The layout of a caravan according to the invention (different from the caravan illustrated in Figure 1) can be seen in Figure 2. The interior of this caravan comprises a living room 9 with three couches 10 and a table 11, a kitchen unit 12, a bedroom 13 with two single beds 14, a toilet unit 15 in the bedroom and a wardrobe 16. An essential feature of this caravan is that the two beds 14 in the bedroom 13 are each arranged in the longitudinal direction of the caravan against one of the two opposite side walls 5 so that a passageway 17 remains between the longitudinal edges of the beds 14 and that the toilet unit 15 is provided between the two beds. In Figure 2 the toilet unit is arranged against the back 3 of the caravan but, in a variant embodiment, the toilet unit 15 (and the bedroom 13) could also be arranged against the front 2 of the caravan.

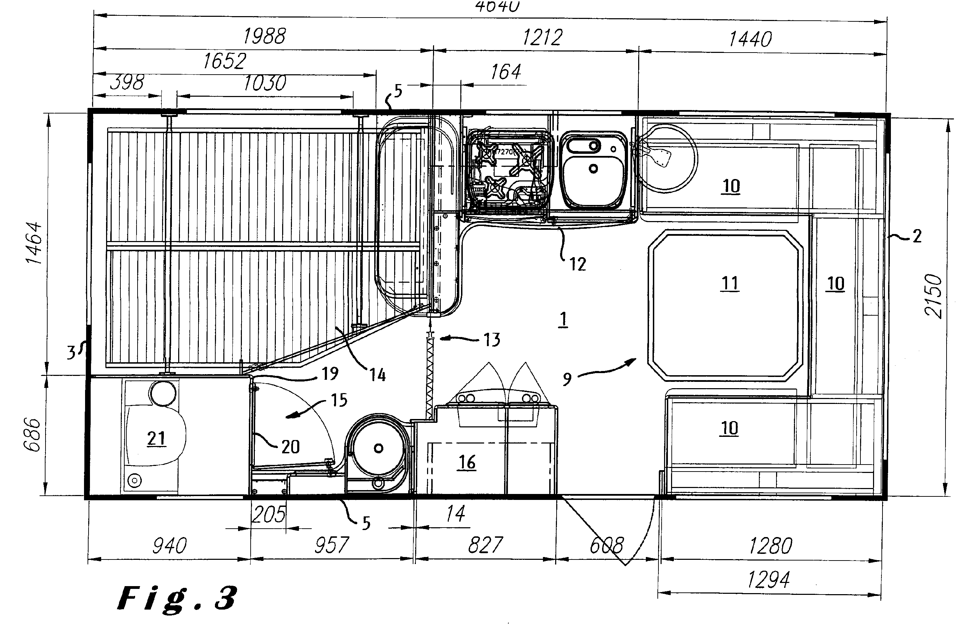

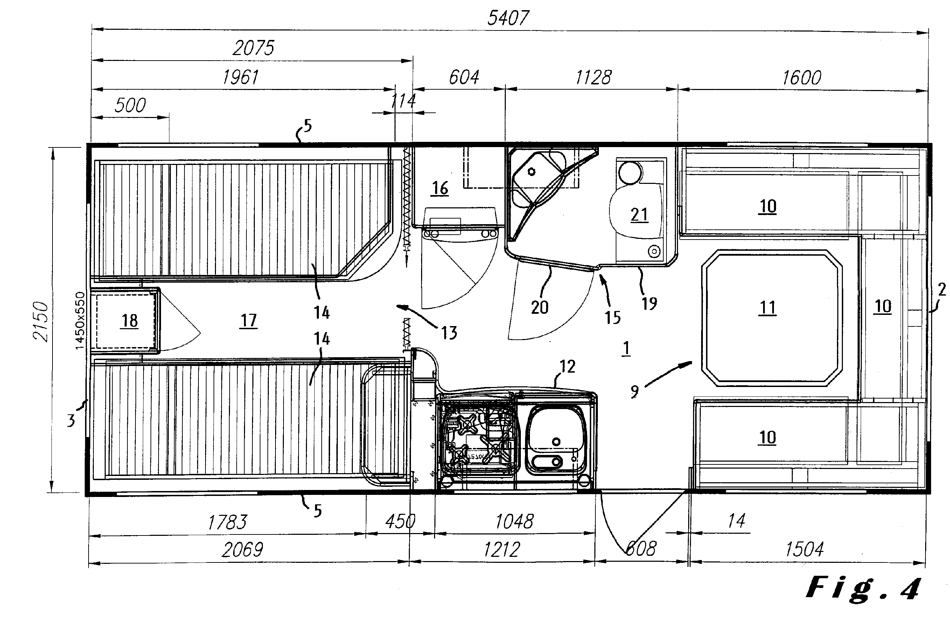

The advantage of such a layout is immediately apparent when comparing the caravan illustrated in Figure 2 with the prior art caravans illustrated in Figures 3 and 4. The caravan illustrated in Figure 3 has a same length as the caravan according to the invention illustrated in Figure 2 and comprises substantially the same elements. In this prior art caravan, the toilet unit 15 is also arranged in the bedroom 13 so that the length of the caravan has not to be increased. However, a drawback of the prior art caravan illustrated in Figure 3 is that the bedroom 13 contains a double bed instead of two single beds. Single beds are not only often preferred by older people but one or even both of the single beds may be bunk beds. The caravan illustrated in Figure 2, which has only a length of 464 cm and which contains in addition to the living room 9 and the bedroom 13, a kitchen unit 12 and a toilet unit 15, can thus offer sleeping accommodation for six persons, which is quite amazing for such a caravan size.

Figure 4 illustrates a prior art caravan containing again substantially the same elements, in particular two single beds instead of the double bed. In this prior art caravan a night table 18 is provided between the two single beds 14 and the toilet unit 15 is arranged between the bedroom 13 and the living room 9. As can be seen on the dimensions indicated on the drawings, such a layout requires a longer caravan, more particularly an additional length of about 76 cm (the couches 10 against the side walls are however about 16 cm longer so that the additional length caused by the different position of the toilet unit comprises about 60 cm). An additional caravan length of 60 cm does not only increases the cost price of the caravan but especially also the weight, more particularly with about 150 kg.

With respect to the dimensions indicated in the figures it should be emphasised that these dimensions are no limiting features of the invention and that the dimensions have only be indicated to enable a comparison with similar prior art caravans. Of course, the caravan according to the invention can be made in all kind of dimensions and it is for example possible to provide an additional living or seating area in the middle of the caravan, or to enlarge the kitchen area, when maintaining for example the length of the caravan illustrated in Figure 4 and positioning the toilet unit 15 between the two beds instead of the night table 18.

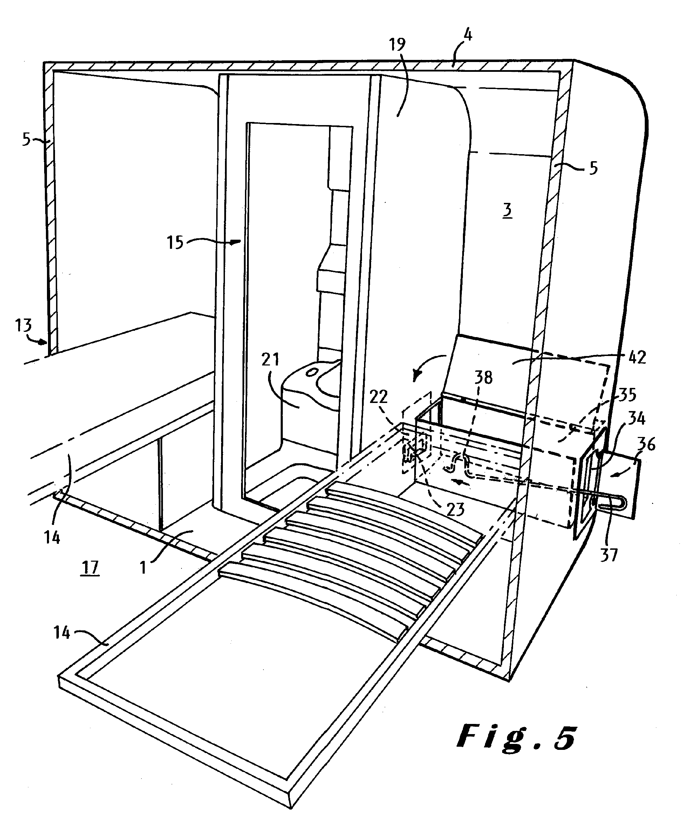

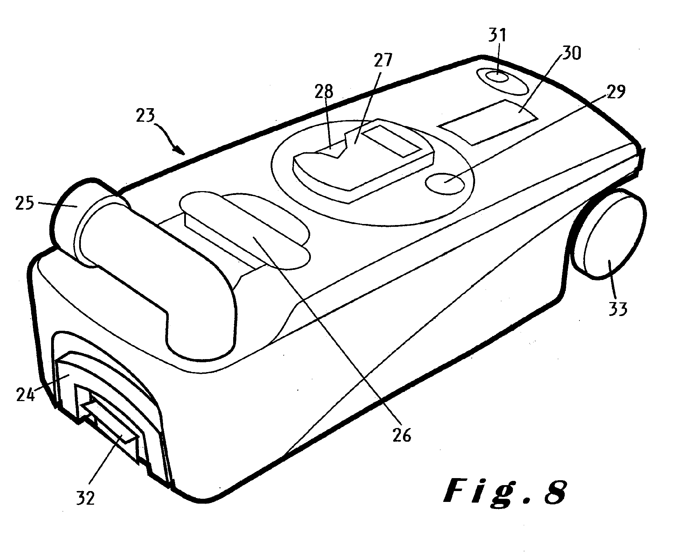

The toilet unit 15 illustrated in the figures comprises a cabinet 19 with a door 20 (not illustrated in Figure 5) and a toilet 21 in the cabinet. The toilet 21 comprises a seat and a bowl with a downwardly directed outlet opening and a storage compartment 22 defined and located below the outlet opening. The toilet 21 further comprises a waste holding tank 23 removably disposed in the storage compartment 22. The waste holding tank can be seen in Figure 8. It comprises a pull-out handle 24, a rotating emptying spout 25, an upper handle 26, a fill opening covered with a cover 27 (which opens automatically when the waste tank is inserted in the storage compartment of the toilet), a valve blade or seal 28, a valve blade opener 29 , an automatic pressure release vent 30, a vent plunger 31 for emptying without splashing and a safety catch 32 for holding the tank in place in the storage compartment of the toilet. The tank is further provided with wheels 33 so that it can be easily transported with the handle 24 in the pulled out position.

The illustrated toilet is a Thetford cassette of the type C-403L. Since such a toilet is known, a more detailed description will not be given thereof. Instead, for the general functioning of the toilet reference can be made in particular to US-A-4 776 631, US-A-5 318 275 and US-B-6 189 161 which are all in the name of Thetford Corporation.

The existing "Thetford cassetes" are arranged to be positioned against a side wall of the caravan so that the waste holding tank can be removed through an outer access opening 34 in a side wall 5 of the caravan. In the caravan or recreational vehicle according to the invention, the toilet unit 15 is however not arranged against a side wall but instead substantially in the middle of the caravan, between two single beds. To enable to remove the waste holding tank in this position of the toilet unit, a tunnel 35 is provided underneath at least one of the beds 14. As can be seen in Figure 5, this tunnel 35 connects the access opening 34 in the side wall 5 of the caravan, which can be closed by means of a little hinging door 36, with the storage compartment 22 of the toilet 21. In the embodiment illustrated in Figure 5 the upper side of the tunnel is formed by a lid 42. When removing this lid 42, the storage compartment 22 of the toilet can be accessed more easily, especially for maintenance purposes. Depending on the height of the tunnel, the slatted base of the bed 14 may engage a side wall of the tunnel or may rest on the lid 42.

It is possible to make the tunnel so large that a person can reach through the tunnel to remove the waste holding tank 23 from the storage compartment 22 of the toilet 21. However, in order to save space, the tunnel has preferably a cross-sectional size corresponding substantially to the cross-sectional dimensions of the waste holding tank. In Figures 5 to 7 a very simple and cheap solution is illustrated for enabling to unlock the waste holding tank in the storage compartment of the toilet, remove the waste holding tank through the quite narrow tunnel 35 and insert the emptied waste holding tank through this tunnel back into the storage compartment.

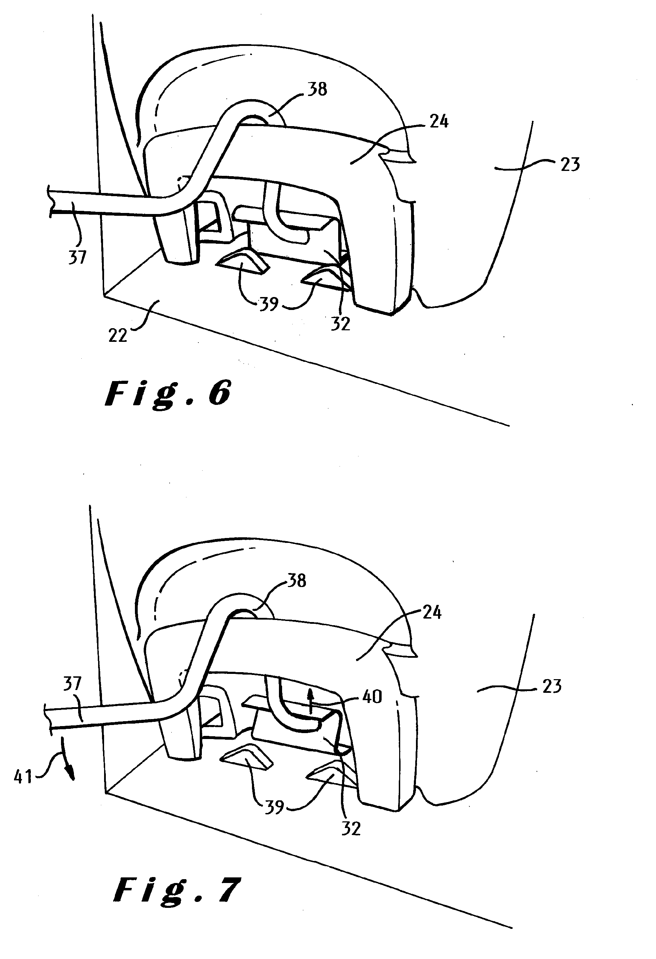

In this solution use is made of a bar or a rod 37 for removing the waste holding tank 23 out of the storage compartment 22 and for inserting it back therein. The bar 37 has a hook-shaped end 38 which is arranged to be hooked behind the pull-out handle 24 on the waste holding tank 23 to enable to pull this tank through the tunnel 35 out of the storage compartment 22 of the toilet 21. At the same time, the hook-shaped end 38 of the bar 37 can be used as a lever to unlock the waste holding tank in the storage compartment. Indeed, as can clearly be seen in Figure 6, in its fully inserted position, the waste holding tank 23 is locked with its safety catch 32 behind a stop or ridge 39 on the bottom of the storage compartment 22. To unlock the waste holding tank 23, the resilient catch 32 has to be lifted according to arrow 40 so that the tank is no longer blocked behind the stop 39. This can be done by means of the bar 37 which forms a lever resting on the pull-out handle 24. One free extremity of the bar 37 is arranged to engage underneath the resilient catch 32 so that when lowering the other end of the bar 37 according to arrow 41 in figure 7, the catch 32 is lifted and the waste holding tank 23 can be pulled out of the storage compartment and further out of the tunnel 35 by means of the bar 37.

After having emptied the waste holding tank 23 it can be inserted back easily through the tunnel 35 into the storage compartment 22 by pushing it therein by means of the bar 37. Indeed, the stop 39 on the bottom of the storage compartment 22 and the resilient safety catch 32 on the waste holding tank 23 are arranged to co-operate with one another so that the catch 32 is displaced upwards by the stop 39 when the tank 23 is inserted in the storage compartment 22 and so that the catch 32 snaps behind the stop 39 when the tank arrives in its fully inserted position in the storage compartment.

The bar 37 has preferably such a length that it can be stored in the tunnel 35. Since this bar occupies only a small amount of space in the tunnel 35, the tunnel can further be used to store all kinds of other materials or equipment, for example gloves, gumboots, tools and products which are to be added into the waste holding tank.

## Claims

1. A recreational vehicle, such as a caravan or a mobile home, having a horizontal floor (1), a front (2), a back (3), a roof (4) and two side walls (5) and comprising an interior with at least a living room (9), a kitchen unit (12), a bedroom (13) for at least two persons and a toilet unit (15) in said bedroom (13), the toilet unit (15) comprising a toilet (21) with a downwardly directed outlet opening and a storage compartment (22) defined and located below said outlet opening with a waste holding tank (23) being removably disposed within said storage compartment (22), one of said side walls (5) having an access opening (34) for removing said tank (23) horizontally out of said storage compartment (22) and inserting it back therein, said tank (23) having a fill opening positioned in registry with said outlet opening when the tank (23) is inserted horizontally into said storage compartment (22), **characterised in that** the bedroom (13) contains at least two beds (14), which are each arranged in the longitudinal direction of the recreational vehicle against an opposite side wall (5) thereof so that a passageway (17) remains between both beds (14), the toilet unit (15) being arranged between both beds (14) and a tunnel (35) being provided underneath at least one of said beds (14) connecting said access opening (34) with the storage compartment (22) of the toilet (21) to enable to remove the waste holding tank (23) through the access opening (34) and the tunnel (35) out of said storage compartment (22) and to insert it back therein.

2. A recreational vehicle according to claim 1, **characterised in that** it contains a bar (37) arranged to be used as a tool for removing the waste holding tank (23) out of the storage compartment (22) and for inserting it back therein.

3. A recreational vehicle according to claim 2, **characterised in that** said bar (37) has one hook-shaped end (38) arranged to be hooked behind an element (24) on the waste holding tank (23) to enable to pull the waste holding tank (23) through the tunnel (35) out of the storage compartment (22).

4. A recreational vehicle according to claim 3, **characterised in that** the storage compartment (22) and the waste holding tank (23) comprise mutually cooperating catch means (32, 39) for locking the waste holding tank (23) in the storage compartment (22), said hook-shaped end (38) of the bar (37) being arranged to act as a lever to unlock said catch means (32, 39).

5. A recreational vehicle according to claim 4, **characterised in that** said catch means (32, 39) comprise a stop (39) on the bottom of the storage compartment (22) and a resilient catch (32) on the waste holding tank (23), the stop (39) and the catch (32) being arranged to co-operate with one another so that the catch (32) is displaced upwards by the stop (39) when the tank (23) is inserted in the storage compartment (22) and so that the catch (32) snaps behind the stop (39) when the tank (23) arrives in its fully inserted position in the storage compartment (22).

6. A recreational vehicle according to claim 5, **characterised in that** the hook-shaped end (38) of the bar (37) is arranged to be hooked over a handle (24) on the waste holding tank (23) and the free extremity of the bar (37) is arranged to engage underneath the resilient catch (32) on the waste holding tank (23) to lift it out of engagement with said stop (39) in order to unlock the waste holding tank (23).

7. A recreational vehicle according to any one of the claims 2 to 6, **characterised in that** said bar (37) has such a length that it can be stored in said tunnel (35).

8. A recreational vehicle according to any one of the claims 1 to 7, **characterised in that** at least one of said beds (14) is a bunk bed.

9. A recreational vehicle according to any one of the claims 1 to 8, **characterised in that** said toilet unit (15) is arranged against the front (2) or the back (3) of the vehicle.

10. A recreational vehicle according to any one of the claims 1 to 9, **characterised in that** said toilet unit (15) further comprises a cabinet (19) wherein said toilet (21) is arranged and which is situated between both of said beds (14).
